# EUROPEAN PATENT SPECIFICATION

(11) **EP 4 494 089 B1**
(45) Date of publication and mention of the grant of the patent: **18.11.2026**
(21) Application number: 22758085.9
(22) Date of filing: 01.08.2022
(51) Int. Cl.: G06T 5/60, G06T 5/70, G06T 11/00, G06V 40/00, G06V 40/16

(54) **SELECTIVE IMAGE BLURRING USING MACHINE LEARNING**
SELEKTIVE BILDUNSCHÄRFE DURCH MASCHINENLERNEN
BROUILLAGE SÉLECTIF D'IMAGE PAR APPRENTISSAGE AUTOMATIQUE

(30) Priority: 16.03.2022 US 202263320349 P
(43) Date of publication of application: 22.01.2025
(73) Proprietor: Google LLC, Mountain View, CA 94043 (US)
(72) Inventor: LIBA, Orly, Mountain View, CA 94043 (US); YU, Lucy, Mountain View, CA 94043 (US); KNAAN, Yael Pritch, Mountain View, CA 94043 (US)
(74) Representative: Betten & Resch
(86) International application number: PCT/US2022/039060
(87) International publication number: WO 2023/177415

(56) References cited:
- US-A1- 2022 012 851
- RAN LIU ET AL: "Using Depth Mapping to realize Bokeh effect with a single camera Android device", EE368 PROJECT REPORT, 1 January 2016 (2016-01-01), XP055652054, Retrieved from the Internet <URL:https://pdfs.semanticscholar.org/0cda/570098837cc1accb7b871611b88c48b8f38c.pdf?_ga=2.244239808.438839129.1575993413-306606644.1550074724> [retrieved on 20191211]
- ANDREY IGNATOV ET AL: "Rendering Natural Camera Bokeh Effect with Deep Learning", ARXIV.ORG, CORNELL UNIVERSITY LIBRARY, 201 OLIN LIBRARY CORNELL UNIVERSITY ITHACA, NY 14853, 10 June 2020 (2020-06-10), XP081694399
- LEE JUNYONG ET AL: "Deep Defocus Map Estimation Using Domain Adaptation", 2019 IEEE/CVF CONFERENCE ON COMPUTER VISION AND PATTERN RECOGNITION (CVPR), IEEE, 15 June 2019 (2019-06-15), pages 12214 - 12222, XP033686315, DOI: 10.1109/CVPR.2019.01250

## Description

### RELATED APPLICATION

This application claims the benefit of U.S. Provisional Application No. 63/320,349, entitled "Selective Image Blurring Using Machine Learning," and filed on March 16, 2022.

### BACKGROUND

In photography, Bokeh refers to blur produced in the out-of-focus parts of an image. Differences in lens aberration and aperture shape cause different bokeh effects. Bokeh effect is a popular photographic effect, e.g., used to generate portrait blur in an image such that the subject of the image (e.g., one or more persons or objects) are in focus (sharp) while other parts of the image, which may be in the foreground or in the background are blurred.

To create a Bokeh effect, a depth map that indicates a respective depth of various pixels in an image is utilized. A focal table based on the depth map indicates the amount of blur to apply to each pixel. The focal table indicates position and depth of the focal plane in the image. The focal table also determines the amount of blur to be applied to the pixels in the background and the foreground. The focal table is typically computed based on information captured by the camera, e.g., auto-focus computations, user selection events (e.g., selecting a region of focus), etc. However, such information is not available for certain images. For example, scanned images, images that are stripped of metadata, etc. do not include such information.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Article *"*Using Depth Mapping to realize Bokeh effect with a single camera Android device" by Gong et al. refers to producing a bokeh effect with a single image taken from an Android device by post processing. It is referred to algorithms to determine the defocus map from a single input image.

Article *"*Rendering Natural Camera Bokeh Effect With Deep Learning" by Ignatov et al describes to a realistic shallow focus technique from photos produced by DSLR cameras. The article refers a bokeh dataset consisting of 5K shallow / wide depth-of-field image pairs captured using the Canon 7D DSLR with 50mm f/1.8 lenses. The dataset is used to train a deep learning model to reproduce a natural bokeh effect based on a single narrow-aperture image.

### SUMMARY

The subject matter claimed is defined in the appended claims. Implementations described herein relate to methods, computing devices, and non-transitory computer-readable media to generate an output image. Some implementations include a method comprising estimating depth for an image to obtain a depth map that indicates depth for each pixel of the image; generating a focal table for the image, wherein the focal table includes parameters that indicate a focal range and at least one of: a front slope or a back slope; determining if one or more faces are detected in the image; if it is determined that one or more faces are detected in the image, identifying a respective face bounding box for each face of the one or more faces, wherein the respective face bounding box includes a region of the image that corresponds to the face and adjusting the focal table to include each of the face bounding boxes; if it is determined that no faces are detected in the image, scaling the focal table; and applying blur to the image using the focal table and the depth map to generate an output image, wherein the output image includes an in-focus region and one or more blurred regions.

In some implementations, adjusting the focal table comprises extending a range of depth values in focus until pixels of each face bounding box are in the focal range. In some implementations, the focal table excludes the front slope when there are no foreground regions in the image that are in front of an image subject and excludes the back slope if there are no background regions in the image behind an image subject. In some implementations, the in-focus region in the output image includes pixels that are associated with depth values in the depth map that correspond to a blur radius of zero.

In some implementations, the image does not include information about focus and depth. In some implementations, the image is a scanned photograph, an image stripped of metadata, an image captured using a camera that does not store focus and depth information, or a frame of a video. In some implementations, the method further comprises displaying the output image.

In some implementations, generating the focal table comprises using a focal table prediction model, wherein the focal table prediction model is a trained machine learning model. In some implementations, the method further comprises training the focal table prediction model wherein the training comprises providing a plurality of training images as input to the focal table prediction model, wherein each training image has an associated depth map and an associated groundtruth blur radius image; and for each training image, generating, using the focal table prediction model, a predicted focal table; obtaining a predicted blur radius image using the predicted focal table and the depth map associated with the training image; computing a loss value based on the predicted blur radius image and the groundtruth blur radius image associated with the training image; and adjusting one or more parameters of the focal table prediction model using the loss value. In some implementations, the depth map associated with each training image is one of: a groundtruth depth map obtained at a time of image capture or an estimated depth map obtained using a depth prediction model. In some implementations, training the focal table prediction model further comprises, prior to adjusting the one or more parameters of the focal table prediction model, weighting the loss value by image gradient of the training image.

Some implementations include a non-transitory computer-readable medium with instructions stored thereon that, when executed by a processor, cause the processor to perform any of the methods as described herein. Some implementations include a computing device comprising: a processor and a memory coupled to the processor with instructions stored thereon that, when executed by the processor cause the processor to perform any of the methods as described herein.

### BRIEF DESCRIPTION OF THE DRAWINGS

Fig. 1 is a block diagram of an example network environment which may be used for one or more implementations described herein.
Figs. 2A-2C illustrate examples of focal tables with different parameterizations.
Fig. 3 illustrates an example method to generate an output image with selective blur, in accordance with some implementations.
Fig. 4 illustrates an example input image, a groundtruth depth image corresponding to the input image, and a predicted depth image corresponding to the input image.
Fig. 6A illustrates an example input image, and a first and second output image corresponding to the input image.
Fig. 6B illustrates a raw focal table prediction and a scaled focal table prediction corresponding to the example input image of Fig. 6A.
Fig. 7 illustrates an example method to generate an output image with selective blur, in accordance with some implementations.
Fig. 8 illustrates an example computing device, in accordance with some implementations.

### DESCRIPTION

This document describes techniques to apply blur to an image, e.g., to produce a Bokeh effect, even when the image does not include information captured by the camera, that is indicative of a focus region (e.g., based on auto-focus computations or user selection events) and/or of depth associated with various regions/pixels of the image (e.g., a depth map). The techniques include estimating depth of the pixels of the image based on a monocular depth estimator that generates depth values based on the image data, e.g., RGB (or other color values) for each pixel of the image. The techniques further include determining a focal table for the image. For example, the focal table may be determined using a suitably trained machine learning model. The depth values of the pixels of an image estimated by the monocular depth estimator may be provided as an input to the machine learning model. The machine learning model may be referred to as "post-capture focal table prediction model."

The focal table is utilized to apply blur to an image. The focal table indicates the position and depth of the focal plane. The focal table also indicates the amount of blur to be applied in the background and/or foreground regions of the image, regions that are not in focus on the output image. The focal table maps the depth in the scene depicted in the image to the amount of blur to be applied to create a Bokeh effect.

### Example Network Environment

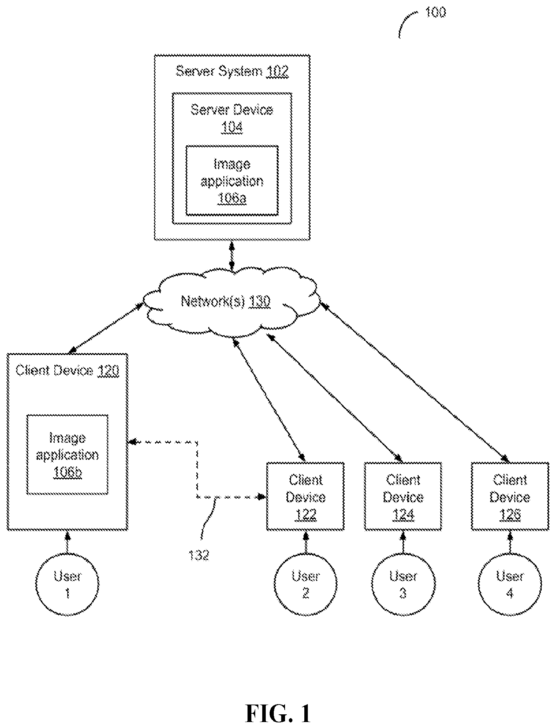

Fig. 1 illustrates a block diagram of an example network environment 100, which may be used in some implementations described herein. In some implementations, network environment 100 includes one or more server systems, e.g., server system 102 in the example of Fig. 1, and a plurality of client devices, e.g., client devices 120-126, each associated with a respective user of users U1-U4. Each of server system 102 and client devices 120-126 may be configured to communicate with a network 130.

Server system 102 can include a server device 104. In some implementations, server device 104 may provide image application 106a. In Fig. 1 and the remaining figures, a letter after a reference number, e.g., "106a," represents a reference to the element having that particular reference number. A reference number in the text without a following letter, e.g., "106," represents a general reference to embodiments of the element bearing that reference number.

An image as referred to herein can include a digital image having pixels with one or more pixel values (e.g., color values, brightness values, etc.). An image can be a still image (e.g., still photos, images with a single frame, etc.), a dynamic image (e.g., animations, animated GIFs, cinemagraphs where a portion of the image includes motion while other portions are static, etc.), or a video (e.g., a sequence of images or image frames that may optionally include audio). An image as used herein may be understood as any of the above. For example, implementations described herein can be used with still images (e.g., a photograph, or other image), videos, or dynamic images.

Network environment 100 also can include one or more client devices, e.g., client devices 120, 122, 124, and 126, which may communicate with each other and/or with server system 102 via network 130. Network 130 can be any type of communication network, including one or more of the Internet, local area networks (LAN), wireless networks, switch or hub connections, etc. In some implementations, network 130 can include peer-to-peer communication between devices, e.g., using peer-to-peer wireless protocols (e.g., Bluetooth^{®}, Wi-Fi Direct, etc.), etc. One example of peer-to-peer communication between two client devices 120 and 122 is shown by arrow 132.

In various implementations, users U1, U2, U3, and U4 may communicate with server system 102 and/or each other using respective client devices 120, 122, 124, and 126. In some examples, users U1, U2, U3, and U4 may interact with each other via applications running on respective client devices and/or server system 102 and/or via a network service, e.g., a social network service or other type of network service, implemented on server system 102. For example, respective client devices 120, 122, 124, and 126 may communicate data to and from one or more server systems, e.g., server system 102.

In some implementations, the server system 102 may provide appropriate data to the client devices such that each client device can receive communicated content or shared content uploaded to the server system 102 and/or a network service. In some examples, users U1-U4 can interact via image sharing, audio or video conferencing, audio, video, or text chat, or other communication modes or applications.

A network service implemented by server system 102 can include a system allowing users to perform a variety of communications, form links and associations, upload and post shared content such as images, text, audio, and other types of content, and/or perform other functions. For example, a client device can display received data such as content posts sent or streamed to the client device and originating from a different client device via a server and/or network service (or from the different client device directly), or originating from a server system and/or network service. In some implementations, client devices can communicate directly with each other, e.g., using peer-to-peer communications between client devices as described above. In some implementations, a "user" can include one or more programs or virtual entities, as well as persons that interface with the system or network.

In some implementations, any of client devices 120, 122, 124, and/or 126 can provide one or more applications. For example, as shown in Fig. 1, client device 120 may provide image application 106b. Client devices 122-126 may also provide similar applications. Image application 106a may be implemented using hardware and/or software of client device 120. In different implementations, image application 106a may be a standalone client application, e.g., executed on any of client devices 120-124, or may work in conjunction with image application 106b provided on server system 102.

Image application 106 may provide various features, implemented with user permission, that are related to images. For example, such features may include one or more of capturing images using a camera, modifying the images, determining image quality (e.g., based on factors such as face size, number of faces, image composition, lighting, exposure, etc.), storing images or videos, automatically applying Bokeh effect to an image, adjusting Bokeh effect, providing user interfaces to view images or image-based creations, etc. In some implementations, with user permission, the features provided by image application 106 may include analyzing images to detect one or persons depicted in the images (e.g., using one or more user-permitted techniques such as face detection, etc.)

While the foregoing description refers to a variety of features of image application 106, it will be understood that in various implementations, image application 106 may provide fewer or more features. Further, each user is provided with options to enable and/or disable certain features. Features of image application 106 are implemented specifically with user permission.

In some implementations, image application 106 may enable a user to manage the image library. For example, a user may use a backup feature of image application 106b on a client device (e.g., any of client devices 120-126) to back up local images on the client device to a server device, e.g., server device 104. For example, the user may manually select one or more images to be backed up or specify backup settings that identify images to be backed up. Backing up an image to a server device may include transmitting the image to the server for storage by the server, e.g., in coordination with image application 106a on server device 104.

In different implementations, client device 120 and/or server system 102 may include other applications (not shown) that may be applications that provide various types of functionality, e.g., calendar, address book, e-mail, web browser, shopping, transportation (e.g., taxi, train, airline reservations, etc.), entertainment (e.g., a music player, a video player, a gaming application, etc.), social networking (e.g., messaging or chat, audio/video calling, sharing images/ video, etc.) and so on. In some implementations, one or more of the other applications may be standalone applications that execute on client device 120. In some implementations, one or more of the other applications may access a server system, e.g., server system 102, that provides data and/or functionality of the other applications.

A user interface on a client device 120, 122, 124, and/or 126 can enable the display of user content and other content, including images, image-based creations, data, and other content as well as communications, privacy settings, notifications, and other data. Such a user interface can be displayed using software on the client device, software on the server device, and/or a combination of client software and server software executing on server device 104, e.g., application software or client software in communication with server system 102. The user interface can be displayed by a display device of a client device or server device, e.g., a touchscreen or other display screen, projector, etc. In some implementations, application programs running on a server system can communicate with a client device to receive user input at the client device and to output data such as visual data, audio data, etc. at the client device.

For ease of illustration, Fig. 1 shows one block for server system 102, server device 104, and four blocks for client devices 120, 122, 124, and 126. Server blocks 102 and/or 104, may represent multiple systems, server devices, and network databases, and the blocks can be provided in different configurations than shown. For example, server system 102 can represent multiple server systems that can communicate with other server systems via the network 130. In some implementations, server system 102 can include cloud hosting servers, for example.

Also, there may be any number of client devices. Each client device can be any type of electronic device, e.g., desktop computer, laptop computer, portable or mobile device, cell phone, smartphone, tablet computer, television, TV set top box or entertainment device, wearable devices (e.g., display glasses or goggles, wristwatch, headset, armband, jewelry, etc.), personal digital assistant (PDA), media player, game device, etc. In some implementations, network environment 100 may not have all of the components shown and/or may have other elements including other types of elements instead of, or in addition to, those described herein.

Other implementations of features described herein can use any type of system and/or service. For example, other networked services (e.g., connected to the Internet) can be used instead of or in addition to a social networking service. Any type of electronic device can make use of features described herein. Some implementations can provide one or more features described herein on one or more client or server devices disconnected from or intermittently connected to computer networks. In some examples, a client device including or connected to a display device can display content posts stored on storage devices local to the client device, e.g., received previously over communication networks.

### Focal table

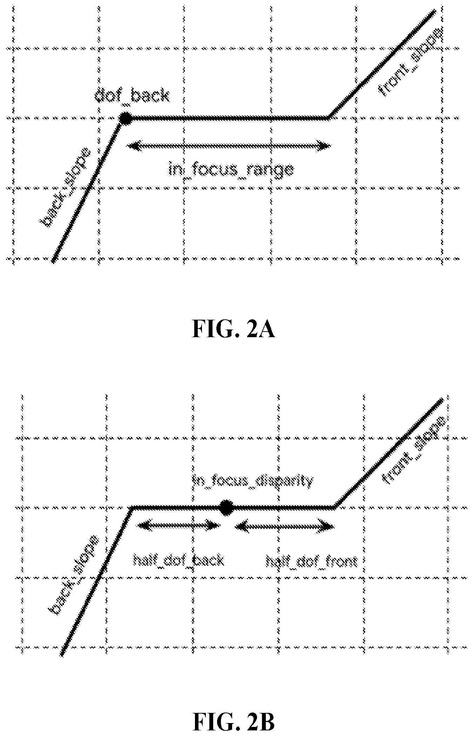

In some implementations, a focal table may indicate a depth of focus (back) value that indicates a depth at the back (far from the camera) of the in-focus region of an image (referred to as *dof_back*), an in-focus range for the image which indicates the range of depth values that are in focus (referred to as *in_focus_range*), a back slope that indicates the blur radius to be applied at respective depth values further from the camera than dof_back (referred to as *back_slope*), and a front slope that indicates the blur radius to be applied at respective depth values closer to the camera, but not in in_focus_range. Fig. 2A illustrates the structure of such a focal table.

In other implementations, the focal table may indicate an in focus disparity (*in_focus_disparity*), a half depth of focus behind the in focus disparity (*half_dof_back*), a half depth of focus in front of the in focus disparity (*half_dof_front*), a back slope and a front slope. Fig. 2B illustrates the structure of such a focal table.

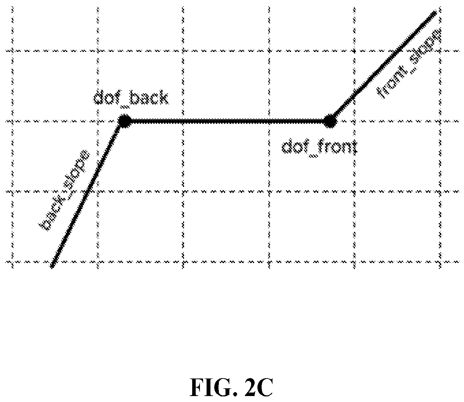

In still other implementations, the focal table may indicate a back depth of focus (*dof_back*), a front depth of focus (*dof_front*), a back slope and a front slope. Fig. 2C illustrates the structure of such a focal table.

### Example method

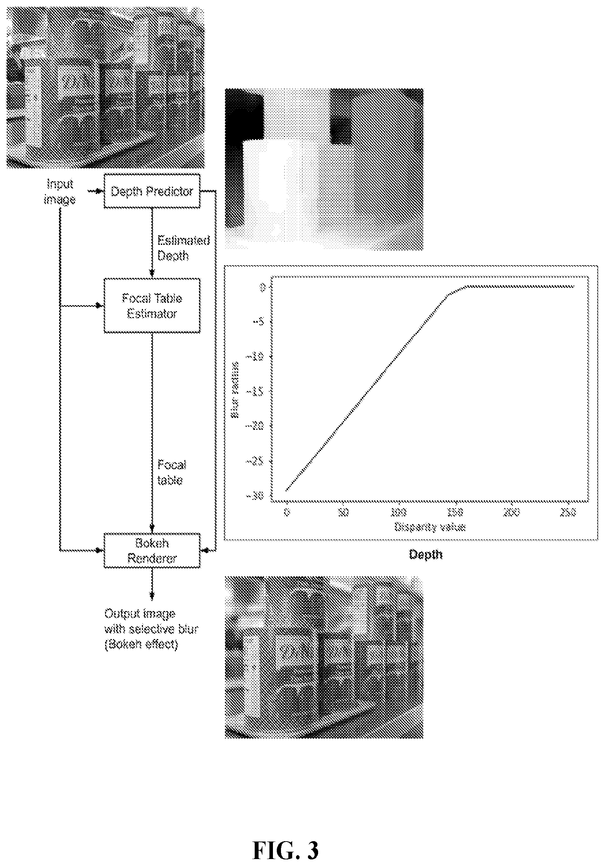

Fig. 3 illustrates an example method to automatically generate an output image with selective blur (Bokeh effect) from an input image (that lacks metadata related to focus and depth). As seen in Fig. 3, the input image is provided to a depth predictor. For example, the depth predictor may be a monocular depth predictor that predicts the depth of each pixel in the input image. An example input image (cans on a shelf) are shown in Fig. 1, with a corresponding depth image that illustrates the depth for each pixel of the input image. The estimated depth for the image, as determined by the depth predictor is provided to a focal table estimator.

The focal table estimator generates a focal table based on the estimated depth and the input image (e.g., an RGB image). An example focal table is shown in Fig. 3. The focal table is a function that specifies for every depth value (0-255) of the depth map, the amount of blur to be applied to various pixels of the input image. The input image, the depth map, and the focal table are provided to a Bokeh renderer. The focal table may be of any type, e.g., any one of the focal table types as described with reference to Figs. 2A-2C, or a different type.

The Bokeh renderer generates an output image based on the input image, the depth map, and the focal table. For example, the Bokeh renderer applies a respective blur amount to various pixels of the image that are in the background or foreground regions as indicated by the focal table. A blur radius corresponding to the depth may be utilized to apply the blur. In the example of Fig. 3, the blur radius keeps the values of the depth map ~155-255 sharp. Beyond this, it specifies gradually increasing the blur radius. Note that the actual radius for rendering is the absolute value of the "blur radius". The rendering function interprets negative values to denote behind the in-focus range in order to composite back-to-front.

### Focal Table Estimator

In some implementations, the focal table estimator may include a machine learning model that is trained to generate a focal table based on estimated depth for an input image. The machine learning model is referred to herein as "post-capture focal table prediction model" or simply "focal table prediction model."

### Training the focal table prediction model - supervised learning

In some implementations, a machine learning model may be trained to predict (estimate) the focal table using supervised learning. In these implementations, the training dataset may include a set of training images with associated depth maps and a respective groundtruth focal table for each training image in the set. For example, the training images may be captured using a camera that captures depth information (groundtruth depth map) as well as focus information and stores such information along with the image, e.g., as image metadata. The respective groundtruth focal table for each image may be generated and stored at capture time, e.g., based on the focus and depth information.

During training, the image and the groundtruth depth map (as captured by the camera) is provided as input to the model under training. The model is trained to generate as output a predicted focal table. A loss value is determined based on the predicted focal table and the groundtruth focal table. For example, the loss value may be a mean squared error (MSE) value. The loss value is utilized as feedback to adjust one or more parameters of the model under training. By utilizing a sufficiently large training dataset and training until a threshold level of accuracy is reached, the model can be trained to generate a predicted focal table that is close to the groundtruth focal table for an arbitrary input image, and is usable to blur the image to produce the Bokeh effect.

The trained model can then be utilized to predict a focal table for images that lack focus information. While predicting the focal table (referred to as inference stage) for an input image, a groundtruth depth map may not be available, e.g., when the input image is a scanned image, or otherwise lacks depth metadata. In such cases, a depth predictor may be utilized to generate a depth map for the image and the depth map may be provided as input to the trained model. The depth predictor may be configured to predict a depth map based on an input image. For example, the depth predictor may be implemented using a machine learning depth prediction model that is trained using supervised learning, such that the trained depth prediction model produces depth maps that are close to the groundtruth depth map from the camera. However, a domain gap may arise when different depth prediction models are trained, e.g., based on different sources of data (e.g., different cameras with their respective depth maps).

Due to these differences, there can be a difference between the depth maps produced by different depth prediction models as well as between the groundtruth and the output of a depth prediction model. Due to such a domain gap (difference in depth maps), using the same output focal table generated by the trained model for depth maps generated by different depth predictor models for an image may produce a different blurred output.

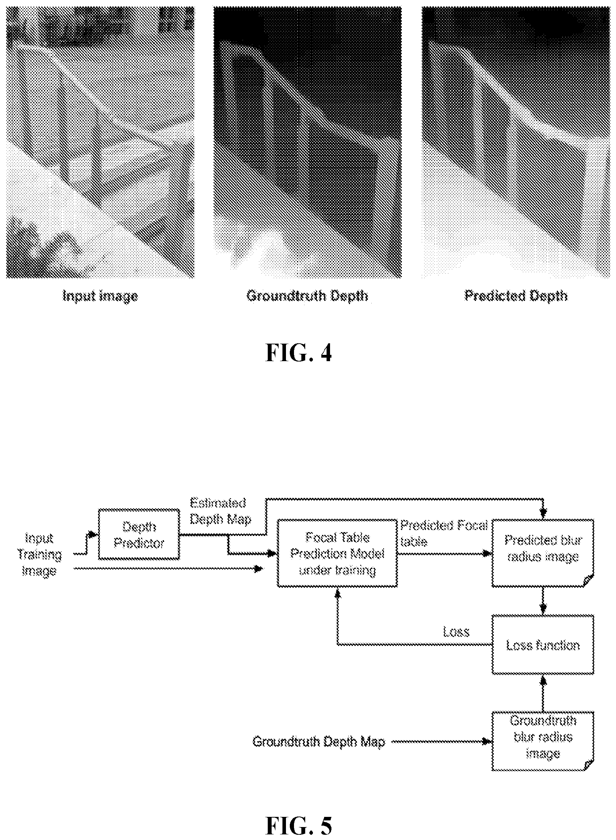

Fig. 4 illustrates an example of the difference between a groundtruth depth map and a predicted depth map. As can be seen, if the same focal table is used to generate an output blurred image based on the groundtruth depth map and the predicted depth map, the blurred output image is different due to the differences in the input depth maps since different amounts of blur will be applied to the same pixel due to the difference in depth.

The problem due to the domain gap can be addressed by training a custom focal table prediction model for each depth predictor and using the appropriate trained model at the inference stage. However, this may require multiple depth predictor models and custom focal table prediction models to be trained and stored, which may be inefficient, and which may produce blurred output images that are inconsistent.

### Training the focal table prediction model - semi-supervised learning

Fig. 5 illustrates an example method to train a custom focal table prediction model using semi-supervised learning. As seen in Fig. 5, an input training image is provided to a depth predictor, e.g., that implements a depth prediction model. The estimated depth map obtained from the depth predictor is provided to the focal table prediction model under training (MUT) which generates a predicted focal table.

A blur radius image is a single-channel image where each pixel is the blur radius at that pixel. Computing it is differentiable. The predicted focal table and the estimated depth map are utilized to generate a predicted blur radius image. Further, the groundtruth depth map and the groundtruth focal table are utilized to generate a groundtruth blur radius image (also referred to as target blur radius image). A loss function (e.g., mean squared error or other suitable function) is utilized to determine a loss value based on the predicted blur radius image and the groundtruth blur radius image. The loss determined by the loss function is utilized to train the focal table prediction model, e.g., to adjust one or more parameters of the focal table prediction model. For example, if the model is a neural network, such adjustment may include adjusting a weight of one or more nodes of one or more layers of the neural network, or a connectivity between different nodes of the neural network.

This technique is semi-supervised - neither the groundtruth depth map nor the groundtruth focal table are provided directly to the focal table prediction model under training. Rather, the ultimate output - the blur radius image that is used for generating the output blurred image - is used for training. By training in this manner, the model can be robust even when different depth prediction models are used or when the groundtruth focal table has different parameters than the predicted focal table generated by the model (e.g., different parameterizations as described with reference to Figs. 2A-2C, or other parameterizations).

### Weighting the loss based on image gradient

Many images may include different regions with different levels of texture. For example, an image that includes a region depicting the sky may have nearly identical pixel values (color and depth) in the sky region, whereas another region that depicts the landscape such as a nearby tree and a mountain further away may have different pixel values (color and depth). In some implementations, the loss may be weighted by image gradients of the input image (that are indicative of image texture). This can account for the fact that different blur radii in a textureless region still look similar in the blurred result, while producing higher accuracy in the textured regions.

### Ensuring that the subject is in focus

In some instances, the focal table estimator may generate a focal table that does not keep the main subject of an image in focus. For example, this may occur when another object is present that is closer to the camera than the main subject. An example of this situation may be when a main subject (e.g., a person) is facing the camera, while another person or object is closer to the camera, but not the main subject (e.g., a person standing with their back to the camera). Other types of errors in the focal table are also possible. For example, such errors may occur due to the training data not being sufficiently representative of real-world images that may depict subjects in arbitrary poses and at various depths from the camera.

When the focal table predicted by the focal table estimator does not have the main subject in focus, e.g., the parameter in_focus_range excludes depth at which the main subject is depicted, the output Bokeh image can be unsatisfactory since blur is applied to the main subject.

To reduce the likelihood of such an unsatisfactory output image, in some implementations, the input image is analyzed, e.g., using any suitable face detection technique, to generate bounding box(es) for the subject(s) of the image, e.g., one or more faces of at least a threshold size (in number of pixels) in the image. The face bounding boxes indicate pixels of the image that include the main subject(s).

In these implementations, the focal table output by the focal table estimator is adjusted prior to applying blur to keep the main subject(s) in focus (not blurred). This is achieved by extending the focal range (e.g., the parameter in_focus_range) to include the main subject(s) in the scene. For example, if the focal range includes depth values d₁-d₂ and the main subject is at a depth value d₃ that is larger than d₂, the focal range is adjusted to include the value d₃, e.g., the range is updated to d₁-d,. By adjusting the focal table prior to applying blur, the output image has the main subject in focus, as long as the bounding boxes are accurate.

### Limiting the amount of blur in images with no faces

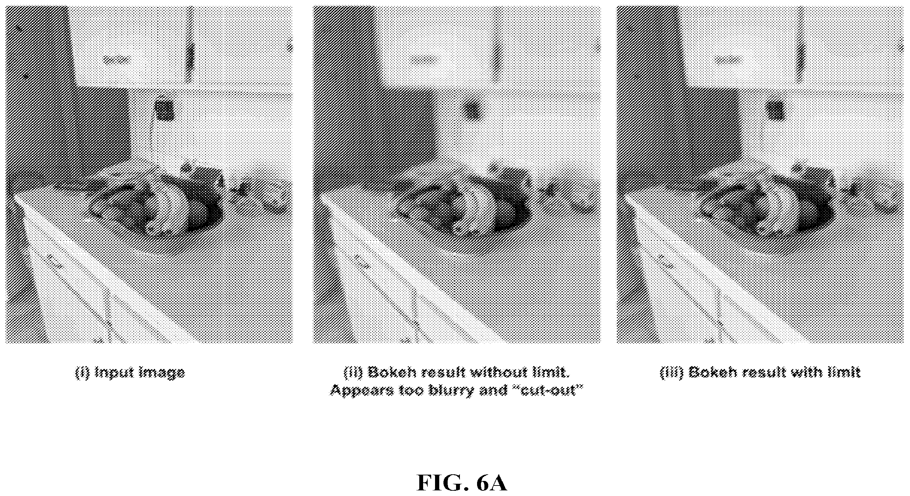

In some cases, a user may attempt to apply a Bokeh effect to an image that includes no faces. In such images without person-subjects, applying less blur is preferable to generate an aesthetically pleasing image. In such cases, if application of face detection techniques indicates that there are no faces detected in the input image, the parameter dof_scale (that controls the amount of blur applied) is limited to a predefined threshold. Fig. 6A illustrates such a scenario. As seen in Fig. 6A-(ii), applying the blur to the input image Fig. 6A(i) without limit based on a predicted focal table produces a blurred image that is too blurry and appears cut-out from the background. Fig. 6A-(iii) illustrates a blurred image with a limit on the amount of blur applied, producing a more aesthetically pleasing image.

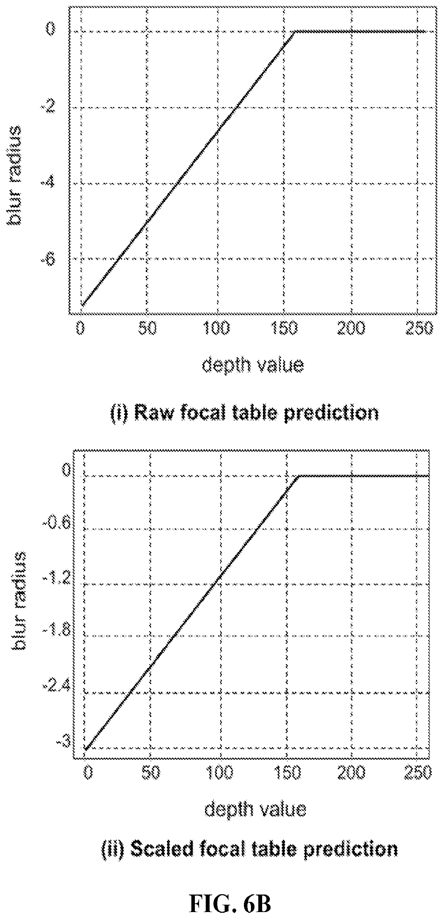

Fig. 6B-(i) illustrates a raw focal table prediction used to generate Fig. 6A-(ii). Fig. 6B-(ii) illustrates a scaled focal table prediction used to generate Fig. 6A-(iii). As seen in the figure, the raw focal table has a blur radius that ranges from 0 to beyond -6, whereas the scaled focal table restricts the blur radius in the range 0 to -3 for the same range of depth values.

### Example method

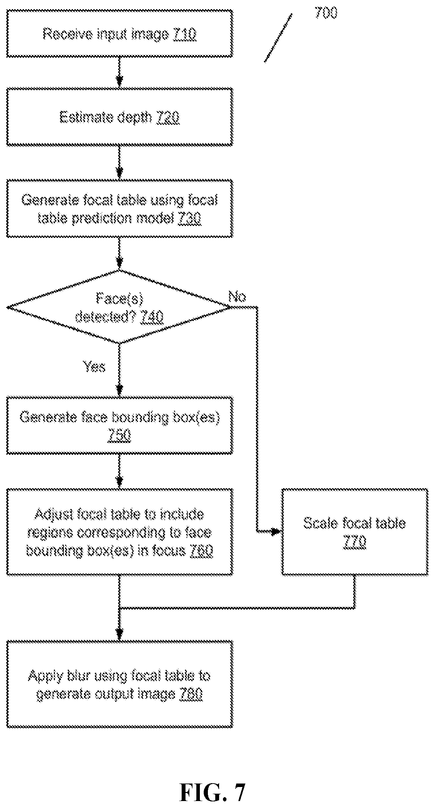

Fig. 7 illustrates an example method 700 to generate a blurred image, e.g., an image with selective blur applied to produce a Bokeh effect. Method 700 may begin at block 710.

At block 710, an input image is received. For example, the input image may be any image that does not include information (e.g., metadata) about focus (the focal plane corresponding to a subject of the image) and depth (e.g., a depth map that indicates a respective depth of each pixel of the image). Such an image may be a scanned photograph, an image stripped of metadata, an image captured using a camera that does not produce or store focus and depth information, etc. In some implementations, the input image may be a frame of a video and method 700 may be performed for multiple frames of the video to generate a video with Bokeh effect. Block 710 may be followed by block 720.

At block 720, depth for the input image is estimated. For example, a depth prediction model may be utilized to perform the depth prediction. A depth map indicating depth for each pixel of the input image may be obtained. Block 720 may be followed by block 730.

At block 730, a focal table is generated for the input image. In some implementations, the focal table may be generated using a trained machine learning model. The focal table may include parameters that indicate a focal range (indicating depth values that are to be kept in focus) and a front slope and/or a back slope (indicating depth values that are to be blurred and a respective blur radius). For example, the front slope may be absent (or null) if there are no foreground regions in the input image that are in front of an image subject. For example, the back slope may be absent (or null) if there are no background regions in the image behind the image subject. Block 730 may be followed by block 740.

At block 740, it is determined whether one or more faces are detected in the input image. Any suitable face detection technique may be utilized to detect faces in the input image. If one or more faces are detected, block 740 is followed by block 750. If no faces are detected, block 740 is followed by block 770.

At block 750, face bounding box(es) are identified for the detected face(s). The bounding boxes may include regions of the input image (pixels) that correspond to a detected face. Block 750 may be followed by block 760.

At block 760, the focal table is adjusted to include regions corresponding to the face bounding box(es). Adjustment of the focal table may include extending the range of depth values in focus until pixels of the face bounding box(es) are in the range that is in focus. Block 760 may be followed by block 780.,

If no faces are detected at block 740, block 740 is followed by block 770. At block 770, the focal table is scaled to limit the amount of blur to be applied to the image. Scaling may include adjusting a front slope and/or a back slope in the focal table. Block 770 may be followed by block 780.

At block 780, blur is applied to the image using the focal table and the depth map to generate an output image. The output image includes an in-focus region - pixels of the image that have depth values corresponding to a blur radius of zero; and one or more blurred regions - pixels of the image that have depth values corresponding to a non-zero value of blur radius. Applying the blur may be performed using a suitable blur kernel. The output image has a Bokeh effect.

In some implementations, one or more blocks of method 700 may be combined. For example, block 750 may be combined with block 740, such that detection of faces and generating bounding boxes is performed at the same time, e.g., using a face detection technique. In some implementations, one or more blocks of the method may not be performed. For example, in some implementations, block 770 may not be performed and block 740 may be followed directly by block 780 when no faces are detected in the image. In some implementations, blocks 740-770 may not be performed, such that block 730 is followed directly by block 780.

In some implementations, method 700 may be performed for a plurality of input images to generate a plurality of corresponding output images. In some implementations, method 700 may be performed for one or more frames (still images) of the video and the output images may be arranged in the same sequence as the input frames to provide a blurred video.

In some implementations, the blurred output image may be displayed via a display device such as a monitor, a wearable device, a virtual reality device, etc. In some implementations, a user interface may be provided that enables a user to edit the output image.

Further to the descriptions above, a user may be provided with controls allowing the user to make an election as to both if and when systems, programs, or features described herein may enable collection of user information (e.g., information about a user's images and/or videos, social network, social actions, or activities, profession, a user's preferences, or a user's current location), and if the user is sent content or communications from a server. In addition, certain data may be treated in one or more ways before it is stored or used, so that personally identifiable information is removed. For example, a user's identity may be treated so that no personally identifiable information can be determined for the user, or a user's geographic location may be generalized where location information is obtained (such as to a city, ZIP code, or state level), so that a particular location of a user cannot be determined. Thus, the user may have control over what information is collected about the user, how that information is used, and what information is provided to the user.

### Example computing device

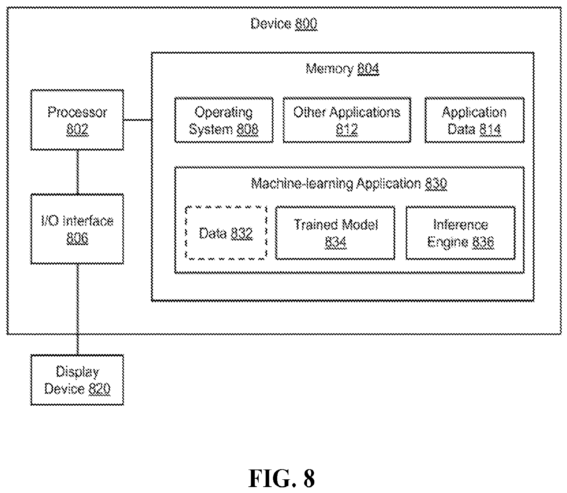

Fig. 8 is a block diagram of an example device 800 which may be used to implement one or more features described herein. In one example, device 800 may be used to implement a client device, e.g., any of client devices 120-126 shown in Fig. 1. Alternatively, device 800 can implement a server device, e.g., server 102 or 104. In some implementations, device 800 may be used to implement a client device, a server device, or both client and server devices. Device 800 can be any suitable computer system, server, or other electronic or hardware device as described above.

One or more methods described herein can be run in a standalone program that can be executed on any type of computing device, a program run on a web browser, a mobile application ("app") run on a mobile computing device (e.g., cell phone, smart phone, tablet computer, wearable device (wristwatch, armband, jewelry, headwear, virtual reality goggles or glasses, augmented reality goggles or glasses, head mounted display, etc.), laptop computer, etc.). In one example, a client/server architecture can be used, e.g., a mobile computing device (as a client device) sends user input data to a server device and receives from the server the final output data for output (e.g., for display). In another example, all computations can be performed within the mobile app (and/or other apps) on the mobile computing device. In another example, computations can be split between the mobile computing device and one or more server devices.

In some implementations, device 800 includes a processor 802, a memory 804, and input/output (I/O) interface 806. Processor 802 can be one or more processors and/or processing circuits to execute program code and control basic operations of the device 800. A "processor" includes any suitable hardware system, mechanism or component that processes data, signals or other information. A processor may include a system with a general-purpose central processing unit (CPU) with one or more cores (e.g., in a single-core, dual-core, or multicore configuration), multiple processing units (e.g., in a multiprocessor configuration), a graphics processing unit (GPU), a field-programmable gate array (FPGA), an application-specific integrated circuit (ASIC), a complex programmable logic device (CPLD), dedicated circuitry for achieving functionality, a special-purpose processor to implement neural network model-based processing, neural circuits, processors optimized for matrix computations (e.g., matrix multiplication), or other systems. In some implementations, processor 802 may include one or more co-processors that implement neural-network processing. In some implementations, processor 802 may be a processor that processes data to produce probabilistic output, e.g., the output produced by processor 802 may be imprecise or may be accurate within a range from an expected output. Processing need not be limited to a particular geographic location, or have temporal limitations. For example, a processor may perform its functions in "real-time," "offline," in a "batch mode," etc. Portions of processing may be performed at different times and at different locations, by different (or the same) processing systems. A computer may be any processor in communication with a memory.

Memory 804 is typically provided in device 800 for access by the processor 802, and may be any suitable processor-readable storage medium, such as random access memory (RAM), read-only memory (ROM), Electrical Erasable Read-only Memory (EEPROM), Flash memory, etc., suitable for storing instructions for execution by the processor, and located separate from processor 802 and/or integrated therewith. Memory 804 can store software operating on the server device 800 by the processor 802, including an operating system 808, machine-learning application 830, other applications 812, and application data 814. Other applications 812 may include applications such as a data display engine, web hosting engine, image display engine, image editing application, image management application, notification engine, social networking engine, etc. In some implementations, the machine-learning application 830 and other applications 812 can each include instructions that enable processor 802 to perform functions described herein, e.g., the method of Fig. 8, or machine learning model training methods described with reference to the focal table estimator.

Other applications 812 can include, e.g., image editing applications, media display applications, communication applications, web hosting engines or applications, mapping applications, media sharing applications, etc. One or more methods disclosed herein can operate in several environments and platforms, e.g., as a stand-alone computer program that can run on any type of computing device, as a web application having web pages, as a mobile application ("app") run on a mobile computing device, etc.

In various implementations, the machine-learning application may utilize Bayesian classifiers, support vector machines, neural networks, or other learning techniques. In some implementations, machine-learning application 830 may include a trained model 834, an inference engine 836, and data 832. In some implementations, data 832 may include training data, e.g., data used to generate trained model 834. For example, training data may include any type of data such as text, images, audio, video, etc. For example, training images may include images that include focus information (e.g., depth of focus) and depth information (e.g., a respective depth of each pixel of the image) as captured by the camera and stored in the image, e.g., as image metadata. When trained model 834 is a focal table estimator, training data may include training images.

Training data may be obtained from any source, e.g., a data repository specifically marked for training, data for which permission is provided for use as training data for machine-learning, etc. In implementations where one or more users permit use of their respective user data to train a machine-learning model, e.g., trained model 834, training data may include such user data. In implementations where users permit use of their respective user data, data 832 may include permitted data such as images (e.g., photos or other user-generated images).

In some implementations, training data may include synthetic data generated for the purpose of training, such as data that is not based on user input or activity in the context that is being trained, e.g., data generated from simulated photographs or other computer-generated images. In some implementations, machine-learning application 830 excludes data 832. For example, in these implementations, the trained model 834 may be generated, e.g., on a different device, and be provided as part of machine-learning application 830. In various implementations, the trained model 834 may be provided as a data file that includes a model structure or form, and associated weights. Inference engine 836 may read the data file for trained model 834 and implement a neural network with node connectivity, layers, and weights based on the model structure or form specified in trained model 834.

In some implementations, the trained model 834 may include one or more model forms or structures. For example, model forms or structures can include any type of neural-network, such as a linear network, a deep neural network that implements a plurality of layers (e.g., "hidden layers" between an input layer and an output layer, with each layer being a linear network), a convolutional neural network (e.g., a network that splits or partitions input data into multiple parts or tiles, processes each tile separately using one or more neural-network layers, and aggregates the results from the processing of each tile), a sequence-to-sequence neural network (e.g., a network that takes as input sequential data, such as words in a sentence, frames in a video, etc. and produces as output a result sequence), etc. The model form or structure may specify connectivity between various nodes and organization of nodes into layers.

For example, the nodes of a first layer (e.g., input layer) may receive data as input data 832 or application data 814. Such data can include, for example, one or more pixels per node, e.g., when the trained model is used for image analysis or image generation or applying an effect, e.g., Bokeh effect. Subsequent intermediate layers may receive as input output of nodes of a previous layer per the connectivity specified in the model form or structure. These layers may also be referred to as hidden layers or latent layers.

A final layer (e.g., output layer) produces an output of the machine-learning application. For example, the output may be a blurred image with Bokeh effect. In some implementations, model form or structure also specifies a number and/ or type of nodes in each layer.

In different implementations, trained model 834 can include a plurality of nodes, arranged into layers per the model structure or form. In some implementations, the nodes may be computational nodes with no memory, e.g., configured to process one unit of input to produce one unit of output. Computation performed by a node may include, for example, multiplying each of a plurality of node inputs by a weight, obtaining a weighted sum, and adjusting the weighted sum with a bias or intercept value to produce the node output. In some implementations, the computation performed by a node may also include applying a step/activation function to the adjusted weighted sum. In some implementations, the step/activation function may be a nonlinear function. In various implementations, such computation may include operations such as matrix multiplication. In some implementations, computations by the plurality of nodes may be performed in parallel, e.g., using multiple processors cores of a multicore processor, using individual processing units of a GPU, or special-purpose neural circuitry. In some implementations, nodes may include memory, e.g., may be able to store and use one or more earlier inputs in processing a subsequent input. For example, nodes with memory may include long short-term memory (LSTM) nodes. LSTM nodes may use the memory to maintain "state" that permits the node to act like a finite state machine (FSM). Models with such nodes may be useful in processing sequential data, e.g., words in a sentence or a paragraph, frames in a video, speech or other audio, etc.

In some implementations, trained model 834 may include embeddings or weights for individual nodes. For example, a model may be initiated as a plurality of nodes organized into layers as specified by the model form or structure. At initialization, a respective weight may be applied to a connection between each pair of nodes that are connected per the model form, e.g., nodes in successive layers of the neural network. For example, the respective weights may be randomly assigned, or initialized to default values. The model may then be trained, e.g., using data 832, to produce a result.

For example, training may include applying supervised learning techniques. In supervised learning, the training data can include a plurality of inputs (e.g., a set of grayscale images) and a corresponding expected output for each input (e.g., a set of groundtruth images corresponding to the grayscale images or other color images). Based on a comparison of the output of the model with the expected output, values of the weights are automatically adjusted, e.g., in a manner that increases a probability that the model produces the expected output when provided similar input.

In some implementations, training may include applying semi-supervised learning or unsupervised learning techniques. In unsupervised learning, only input data may be provided and the model may be trained to differentiate data, e.g., to cluster input data into a plurality of groups, where each group includes input data that are similar in some manner.

In some implementations, unsupervised learning may be used to produce knowledge representations, e.g., that may be used by machine-learning application 830In various implementations, a trained model includes a set of weights, or embeddings, corresponding to the model structure. In implementations where data 832 is omitted, machine-learning application 830 may include trained model 834 that is based on prior training, e.g., by a developer of the machine-learning application 830, by a third-party, etc. In some implementations, trained model 834 may include a set of weights that are fixed, e.g., downloaded from a server that provides the weights.

Machine-learning application 830 also includes an inference engine 836. Inference engine 836 is configured to apply the trained model 834 to data, such as application data 814, to provide an inference. In some implementations, inference engine 836 may include software code to be executed by processor 802. In some implementations, inference engine 836 may specify circuit configuration (e.g., for a programmable processor, for a field programmable gate array (FPGA), etc.) enabling processor 802 to apply the trained model. In some implementations, inference engine 836 may include software instructions, hardware instructions, or a combination. In some implementations, inference engine 836 may offer an application programming interface (API) that can be used by operating system 808 and/or other applications 812 to invoke inference engine 836, e.g., to apply trained model 834 to application data 814 to generate an inference. For example, the inference for a focal table estimator model may be a focal table. In another example, the inference for a depth prediction model may be predicted depth values for various pixels of an image.

Machine-learning application 830 may provide several technical advantages. For example, when trained model 834 is generated based on unsupervised learning, trained model 834 can be applied by inference engine 836 to produce knowledge representations (e.g., numeric representations) from input data, e.g., application data 814. For example, a model trained for image analysis may produce representations of images that have a smaller data size (e.g., 1 KB) than input images (e.g., 10 MB). In some implementations, such representations may be helpful to reduce processing cost (e.g., computational cost, memory usage, etc.) to generate an output (e.g., a label, a classification, a sentence descriptive of the image, a colorized image from a grayscale image, etc.).

In some implementations, such representations may be provided as input to a different machine-learning application that produces output from the output of inference engine 836. In some implementations, knowledge representations generated by machine-learning application 830 may be provided to a different device that conducts further processing, e.g., over a network. In such implementations, providing the knowledge representations rather than the images may provide a technical benefit, e.g., enable faster data transmission with reduced cost. In another example, a model trained for clustering documents may produce document clusters from input documents. The document clusters may be suitable for further processing (e.g., determining whether a document is related to a topic, determining a classification category for the document, etc.) without the need to access the original document, and therefore, save computational cost.

In some implementations, machine-learning application 830 may be implemented in an offline manner. In these implementations, trained model 834 may be generated in a first stage, and provided as part of machine-learning application 830. In some implementations, machine-learning application 830 may be implemented in an online manner. For example, in such implementations, an application that invokes machine-learning application 830 (e.g., operating system 808, one or more of other applications 812) may utilize an inference produced by machine-learning application 830, e.g., provide the inference to a user, and may generate system logs (e.g., if permitted by the user, an action taken by the user based on the inference; or if utilized as input for further processing, a result of the further processing). System logs may be produced periodically, e.g., hourly, monthly, quarterly, etc. and may be used, with user permission, to update trained model 834, e.g., to update embeddings for trained model 834.

In some implementations, machine-learning application 830 may be implemented in a manner that can adapt to particular configuration of device 800 on which the machine-learning application 830 is executed. For example, machine-learning application 830 may determine a computational graph that utilizes available computational resources, e.g., processor 802. For example, if machine-learning application 830 is implemented as a distributed application on multiple devices, machine-learning application 830 may determine computations to be carried out on individual devices in a manner that optimizes computation. In another example, machine-learning application 830 may determine that processor 802 includes a GPU with a particular number of GPU cores (e.g., 1000) and implement the inference engine accordingly (e.g., as 1000 individual processes or threads).

In some implementations, machine-learning application 830 may implement an ensemble of trained models. For example, trained model 834 may include a plurality of trained models that are each applicable to the same input data. In these implementations, machine-learning application 830 may choose a particular trained model, e.g., based on available computational resources, success rate with prior inferences, etc. In some implementations, machine-learning application 830 may execute inference engine 836 such that a plurality of trained models is applied. In these implementations, machine-learning application 830 may combine outputs from applying individual models, e.g., using a voting-technique that scores individual outputs from applying each trained model, or by choosing one or more particular outputs. Further, in these implementations, the machine-learning application may apply a time threshold for applying individual trained models (e.g., 0.5 ms) and utilize only those individual outputs that are available within the time threshold. Outputs that are not received within the time threshold may not be utilized, e.g., discarded. For example, such approaches may be suitable when there is a time limit specified while invoking the machine-learning application, e.g., by operating system 808 or one or more applications 812.

In different implementations, machine-learning application 830 can produce different types of outputs. For example, machine-learning application 830 can provide representations or clusters (e.g., numeric representations of input data), labels (e.g., for input data that includes images, documents, etc.), phrases or sentences (e.g., descriptive of an image or video, suitable for use as a response to an input sentence, etc.), images (e.g., colorized images, images with Bokeh effect, or otherwise stylized images generated by the machine-learning application in response to input images, e.g., grayscale images), audio or video (e.g., in response an input video, machine-learning application 830 may produce an output video with a particular effect applied, e.g., rendered in a comic-book or particular artist's style, when trained model 834 is trained using training data from the comic book or particular artist, etc. In some implementations, machine-learning application 830 may produce an output based on a format specified by an invoking application, e.g., operating system 808 or one or more applications 812. In some implementations, an invoking application may be another machine-learning application. For example, such configurations may be used in generative adversarial networks, where an invoking machine-learning application is trained using output from machine-learning application 830 and vice-versa.

Any of software in memory 804 can alternatively be stored on any other suitable storage location or computer-readable medium. In addition, memory 804 (and/or other connected storage device(s)) can store one or more messages, one or more taxonomies, electronic encyclopedia, dictionaries, thesauruses, knowledge bases, message data, grammars, user preferences, and/or other instructions and data used in the features described herein. Memory 804 and any other type of storage (magnetic disk, optical disk, magnetic tape, or other tangible media) can be considered "storage" or "storage devices."

I/O interface 806 can provide functions to enable interfacing the server device 800 with other systems and devices. Interfaced devices can be included as part of the device 800 or can be separate and communicate with the device 800. For example, network communication devices, storage devices (e.g., memory and/or database 106), and input/output devices can communicate via I/O interface 806. In some implementations, the I/O interface can connect to interface devices such as input devices (keyboard, pointing device, touchscreen, microphone, camera, scanner, sensors, etc.) and/or output devices (display devices, speaker devices, printers, motors, etc.).

Some examples of interfaced devices that can connect to I/O interface 806 can include one or more display devices 820 that can be used to display content, e.g., images, video, and/or a user interface of an output application as described herein. Display device 820 can be connected to device 800 via local connections (e.g., display bus) and/or via networked connections and can be any suitable display device. Display device 820 can include any suitable display device such as an LCD, LED, or plasma display screen, CRT, television, monitor, touchscreen, 3-D display screen, or other visual display device. For example, display device 820 can be a flat display screen provided on a mobile device, multiple display screens provided in a goggles or headset device, or a monitor screen for a computer device.

The I/O interface 806 can interface to other input and output devices. Some examples include one or more cameras which can capture images. Some implementations can provide a microphone for capturing sound (e.g., as a part of captured images, voice commands, etc.), audio speaker devices for outputting sound, or other input and output devices.

For ease of illustration, Fig. 7 shows one block for each of processor 802, memory 804, I/O interface 806, and software blocks 808, 812, and 830. These blocks may represent one or more processors or processing circuitries, operating systems, memories, I/O interfaces, applications, and/or software modules. In other implementations, device 800 may not have all of the components shown and/or may have other elements including other types of elements instead of, or in addition to, those shown herein. While some components are described as performing blocks and operations as described in some implementations herein, any suitable component or combination of components of environment 100, device 800, similar systems, or any suitable processor or processors associated with such a system, may perform the blocks and operations described.

Methods described herein can be implemented by computer program instructions or code, which can be executed on a computer. For example, the code can be implemented by one or more digital processors (e.g., microprocessors or other processing circuitry) and can be stored on a computer program product including a non-transitory computer readable medium (e.g., storage medium), such as a magnetic, optical, electromagnetic, or semiconductor storage medium, including semiconductor or solid state memory, magnetic tape, a removable computer diskette, a random access memory (RAM), a read-only memory (ROM), flash memory, a rigid magnetic disk, an optical disk, a solid-state memory drive, etc. The program instructions can also be contained in, and provided as, an electronic signal, for example in the form of software as a service (SaaS) delivered from a server (e.g., a distributed system and/or a cloud computing system). Alternatively, one or more methods can be implemented in hardware (logic gates, etc.), or in a combination of hardware and software. Example hardware can be programmable processors (e.g., Field-Programmable Gate Array (FPGA), Complex Programmable Logic Device), general purpose processors, graphics processors, Application Specific Integrated Circuits (ASICs), and the like. One or more methods can be performed as part of or component of an application running on the system, or as an application or software running in conjunction with other applications and operating system.

Although the description has been described with respect to particular implementations thereof, these particular implementations are merely illustrative, and not restrictive. Concepts illustrated in the examples may be applied to other examples and implementations.

Note that the functional blocks, operations, features, methods, devices, and systems described in the present disclosure may be integrated or divided into different combinations of systems, devices, and functional blocks as would be known to those skilled in the art. Any suitable programming language and programming techniques may be used to implement the routines of particular implementations. Different programming techniques may be employed, e.g., procedural or object-oriented. The routines may execute on a single processing device or multiple processors. Although the steps, operations, or computations may be presented in a specific order, the order may be changed in different particular implementations. In some implementations, multiple steps or operations shown as sequential in this specification may be performed at the same time.

## Claims

1. A computer-implemented method (700) comprising:
estimating (720) depth for an image to obtain a depth map that indicates depth for each pixel of the image;
generating (730) a focal table for the image, wherein the focal table is based on the depth map and indicates the amount of blur to apply to each pixel, wherein the focal table indicates position and depth of a focal plane in the image, wherein the focal table includes parameters that indicate a focal range, indicating depth values that are to be kept in focus, and at least one of: a front slope or a back slope, indicating depth values that are to be blurred and respective blur radius;
determining (740) if one or more faces are detected in the image;
if it is determined that one or more faces are detected in the image,
identifying (750) a respective face bounding box for each face of the one or more faces, wherein the respective face bounding box includes a region of the image that corresponds to the face; and
adjusting (760) the focal table to include each of the face bounding boxes;
if it is determined that no faces are detected in the image, scaling (770) the focal table; and
applying (780) blur to the image using the focal table and the depth map to generate an output image, wherein the output image includes an in-focus region and one or more blurred regions.

2. The computer-implemented method (700) of claim 1, wherein adjusting the focal table comprises extending a range of depth values in focus until pixels of each face bounding box are in the focal range.

3. The computer-implemented method (700) of claim 1, wherein the focal table excludes the front slope when there are no foreground regions in the image that are in front of an image subject and excludes the back slope if there are no background regions in the image behind an image subject.

4. The computer-implemented method (700) of claim 1, wherein the in-focus region in the output image includes pixels that are associated with depth values in the depth map that correspond to a blur radius of zero.

5. The computer-implemented method (700) of claim 1, wherein generating the focal table comprises using a focal table prediction model, wherein the focal table prediction model is a trained machine learning model, and the method further comprises training the focal table prediction model wherein the training comprises:
providing a plurality of training images as input to the focal table prediction model, wherein each training image has an associated depth map and an associated groundtruth blur radius image; and
for each training image,
generating, using the focal table prediction model, a predicted focal table;
obtaining a predicted blur radius image using the predicted focal table and the depth map associated with the training image;
computing a loss value based on the predicted blur radius image and the groundtruth blur radius image associated with the training image; and
adjusting one or more parameters of the focal table prediction model using the loss value.

6. The computer-implemented method (700) of claim 5, wherein the depth map associated with each training image is one of: a groundtruth depth map obtained at a time of image capture or an estimated depth map obtained using a depth prediction model.

7. The computer-implemented method (700) of claim 5, wherein training the focal table prediction model further comprises, prior to adjusting the one or more parameters of the focal table prediction model, weighting the loss value by image gradient of the training image.

8. The computer-implemented method (700) of claim 1, wherein the image does not include information about focus and depth.

9. The computer-implemented method (700) of claim 1, wherein the image is a scanned photograph, an image stripped of metadata, an image captured using a camera that does not store focus and depth information, or a frame of a video.

10. The computer-implemented method (700) of claim 1, further comprising displaying the output image.

11. A non-transitory computer-readable medium with instructions stored thereon that, when executed by a processor, cause the processor to perform operations comprised by the computer-implemented method according to any of claims 1 to 10.

12. A computing device (800) comprising:
a processor (802); and
a memory (804) coupled to the processor (802) with instructions stored thereon that, when executed by the processor (802) cause the processor (802) to perform operations comprised by the computer-implemented method according to any of claims 1 to 10.

## Patentansprüche

1. Computerimplementiertes Verfahren (700), umfassend:
Schätzen (720) der Tiefe für ein Bild, um eine Tiefenkarte zu erhalten, die die Tiefe für jedes Pixel des Bildes angibt;
Erzeugen (730) einer Fokustabelle für das Bild, wobei die Fokustabelle auf der Tiefenkarte basiert und den Grad der auf jedes Pixel anzuwendenden Unschärfe angibt, wobei die Fokustabelle die Position und Tiefe einer Fokusebene im Bild angibt, wobei die Fokustabelle Parameter einschließt, die einen Fokusbereich, der Tiefenwerte angibt, die im Fokus gehalten werden sollen, und mindestens eine von: einer vorderen Steigung oder einer hinteren Steigung, die Tiefenwerte, die unscharf gemacht werden sollen, und einen jeweiligen Unschärferadius angibt, angeben;
Bestimmen (740), ob im Bild ein oder mehrere Gesichter erkannt werden;
falls bestimmt wird, dass im Bild ein oder mehrere Gesichter erkannt werden,
Identifizieren (750) eines jeweiligen Gesichtsbegrenzungsrahmens für jedes Gesicht des einen oder der mehreren Gesichter, wobei der jeweilige Gesichtsbegrenzungsrahmen eine Region des Bildes einschließt, die dem Gesicht entspricht; und
Anpassen (760) der Fokustabelle, um jeden der Gesichtsbegrenzungsrahmen einzuschließen;
falls bestimmt wird, dass im Bild keine Gesichter erkannt werden, Skalieren (770) der Fokustabelle; und
Anwenden (780) von Unschärfe auf das Bild unter Verwendung der Fokustabelle und der Tiefenkarte, um ein Ausgabebild zu erzeugen, wobei das Ausgabebild eine fokussierte Region und eine oder mehrere unscharf gemachte Regionen einschließt.

2. Computerimplementiertes Verfahren (700) nach Anspruch 1, wobei Anpassen der Fokustabelle Erweitern eines Bereichs von Tiefenwerten im Fokus umfasst, bis sich Pixel jedes Gesichtsbegrenzungsrahmens im Fokusbereich befinden.

3. Computerimplementiertes Verfahren (700) nach Anspruch 1, wobei die Fokustabelle die vordere Steigung ausschließt, wenn sich im Bild keine Vordergrundregionen vor einem Bildmotiv befinden, und die hintere Steigung ausschließt, falls sich im Bild keine Hintergrundregionen hinter einem Bildmotiv befinden.

4. Computerimplementiertes Verfahren (700) nach Anspruch 1, wobei die fokussierte Region im Ausgabebild Pixel einschließt, die mit Tiefenwerten in der Tiefenkarte verknüpft sind, die einem Unschärferadius von null entsprechen.

5. Computerimplementiertes Verfahren (700) nach Anspruch 1, wobei Erzeugen der Fokustabelle Verwenden eines Fokustabellen-Vorhersagemodells umfasst, wobei das Fokustabellen-Vorhersagemodell ein trainiertes Maschinenlernmodell ist, und das Verfahren ferner Trainieren des Fokustabellen-Vorhersagemodells umfasst, wobei das Trainieren Folgendes umfasst:
Bereitstellen einer Mehrzahl von Trainingsbildern als Eingabe für das Fokustabellen-Vorhersagemodell, wobei jedes Trainingsbild eine verknüpfte Tiefenkarte und ein verknüpftes Ground-Truth-Unschärferadiusbild aufweist; und
für jedes Trainingsbild,
Erzeugen, unter Verwendung des Fokustabellen-Vorhersagemodells, einer vorhergesagten Fokustabelle;
Erhalten eines vorhergesagten Unschärferadiusbildes unter Verwendung der vorhergesagten Fokustabelle und der mit dem Trainingsbild verknüpften Tiefenkarte;
Berechnen eines Verlustwertes basierend auf dem vorhergesagten Unschärferadiusbild und dem mit dem Trainingsbild verknüpften Ground-Truth-Unschärferadiusbild; und
Anpassen eines oder mehrerer Parameter des Fokustabellen-Vorhersagemodells unter Verwendung des Verlustwertes.

6. Computerimplementiertes Verfahren (700) nach Anspruch 5, wobei die mit jedem Trainingsbild verknüpfte Tiefenkarte eine von: einer zu einem Zeitpunkt der Bildaufnahme erhaltenen Ground-Truth-Tiefenkarte oder einer unter Verwendung eines Tiefenvorhersagemodells erhaltenen geschätzten Tiefenkarte ist.

7. Computerimplementiertes Verfahren (700) nach Anspruch 5, wobei Trainieren des Fokustabellen-Vorhersagemodells ferner vor dem Anpassen des einen oder der mehreren Parameter des Fokustabellen-Vorhersagemodells Gewichten des Verlustwertes mit dem Bildgradienten des Trainingsbildes umfasst.

8. Computerimplementiertes Verfahren (700) nach Anspruch 1, wobei das Bild keine Informationen über Fokus und Tiefe einschließt.

9. Computerimplementiertes Verfahren (700) nach Anspruch 1, wobei es sich bei dem Bild um ein gescanntes Foto, ein von Metadaten befreites Bild, ein Bild, das unter Verwendung einer Kamera aufgenommen wurde, die keine Fokus- und Tiefeninformationen speichert, oder einen Frame eines Videos handelt.

10. Computerimplementiertes Verfahren (700) nach Anspruch 1, ferner umfassend Darstellen des Ausgabebildes.

11. Nichtflüchtiges computerlesbares Medium mit darauf gespeicherten Anweisungen, die, wenn sie von einem Prozessor ausgeführt werden, den Prozessor veranlassen, Vorgänge durchzuführen, die das computerimplementierte Verfahren nach einem der Ansprüche 1-10 umfasst.

12. Rechenvorrichtung (800), umfassend:
einen Prozessor (802); und
einen mit dem Prozessor (802) gekoppelten Speicher (804) mit darauf gespeicherten Anweisungen, die, wenn sie von dem Prozessor (802) ausgeführt werden, den Prozessor (802) veranlassen, Vorgänge durchzuführen, die das computerimplementierte Verfahren nach einem der Ansprüche 1-10 umfasst.

## Revendications

1. Procédé mis en œuvre par ordinateur (700) comprenant :
l'estimation (720) de la profondeur pour une image afin d'obtenir une carte de profondeur qui indique la profondeur de chaque pixel de l'image ;
la génération (730) d'une table focale pour l'image, dans lequel la table focale est basée sur la carte de profondeur et indique la quantité de flou à appliquer à chaque pixel, dans lequel la table focale indique la position et la profondeur d'un plan focal dans l'image, dans lequel la table focale comporte des paramètres qui indiquent une plage focale, indiquant des valeurs de profondeur qui doivent être maintenues dans la mise au point, et au moins l'un des éléments suivants : une pente avant ou une pente arrière, indiquant des valeurs de profondeur qui doivent être floutées et le rayon de flou respectif ;
le fait de déterminer (740) si un ou plusieurs visages sont détectés dans l'image ;
s'il est déterminé qu'un ou plusieurs visages sont détectés dans l'image,
l'identification (750) d'un cadre de délimitation de visage respectif pour chaque visage des un ou plusieurs visages, dans lequel le cadre de délimitation de visage respectif comporte une région de l'image qui correspond au visage ; et
le réglage (760) de la table focale pour comporter chacun des cadres de délimitation de visage ;
s'il est déterminé qu'aucun visage n'est détecté dans l'image, la mise à l'échelle (770) de la table focale ; et
l'application (780) d'un flou à l'image à l'aide de la table focale et de la carte de profondeur pour générer une image de sortie, dans lequel l'image de sortie comporte une région mise au point et une ou plusieurs régions floues.

2. Procédé mis en œuvre par ordinateur (700) selon la revendication 1, dans lequel le réglage de la table focale comprend l'extension d'une plage de valeurs de profondeur dans la mise au point jusqu'à ce que les pixels de chaque cadre de délimitation de visage soient dans la plage focale.

3. Procédé mis en œuvre par ordinateur (700) selon la revendication 1, dans lequel la table focale exclut la pente avant lorsqu'il n'y a pas de régions de premier plan dans l'image qui se trouvent devant un sujet d'image et exclut la pente arrière s'il n'y a pas de régions d'arrière-plan dans l'image derrière un sujet d'image.

4. Procédé mis en œuvre par ordinateur (700) selon la revendication 1, dans lequel la région mise au point dans l'image de sortie comporte des pixels qui sont associés à des valeurs de profondeur dans la carte de profondeur qui correspondent à un rayon de flou de zéro.

5. Procédé mis en œuvre par ordinateur (700) selon la revendication 1, dans lequel la génération de la table focale comprend l'utilisation d'un modèle de prédiction de table focale, dans lequel le modèle de prédiction de table focale est un modèle d'apprentissage automatique entraîné, et le procédé comprend en outre l'entraînement du modèle de prédiction de table focale, dans lequel l'entraînement comprend :
la fourniture d'une pluralité d'images d'entraînement comme entrée du modèle de prédiction de table focale, dans lequel chaque image d'entraînement a une carte de profondeur associée et une image de rayon de flou de référence associée ; et
pour chaque image d'entraînement,
la génération, à l'aide du modèle de prédiction de table focale, d'une table focale prédite ;
l'obtention d'une image de rayon de flou prédite à l'aide de la table focale prédite et de la carte de profondeur associée à l'image d'entraînement ;
le calcul d'une valeur de perte sur la base de l'image de rayon de flou prédite et de l'image de rayon de flou de référence associée à l'image d'entraînement ; et
le réglage d'un ou de plusieurs paramètres du modèle de prédiction de table focale à l'aide de la valeur de perte.

6. Procédé mis en œuvre par ordinateur (700) selon la revendication 5, dans lequel la carte de profondeur associée à chaque image d'entraînement est l'une : d'une carte de profondeur de référence obtenue au moment de la capture d'image ou d'une carte de profondeur estimée obtenue à l'aide d'un modèle de prédiction de profondeur.

7. Procédé mis en œuvre par ordinateur (700) selon la revendication 5, dans lequel l'entraînement du modèle de prédiction de table focale comprend en outre, avant le réglage des un ou plusieurs paramètres du modèle de prédiction de table focale, la pondération de la valeur de perte par le gradient d'image de l'image d'entraînement.

8. Procédé mis en œuvre par ordinateur (700) selon la revendication 1, dans lequel l'image ne comporte pas d'informations concernant la mise au point et la profondeur.

9. Procédé mis en œuvre par ordinateur (700) selon la revendication 1, dans lequel l'image est une photographie numérisée, une image dépourvue de métadonnées, une image capturée à l'aide d'un appareil photo qui ne stocke pas d'informations de mise au point et de profondeur, ou une trame d'une vidéo.

10. Procédé mis en œuvre par ordinateur (700) selon la revendication 1, comprenant en outre l'affichage de l'image de sortie.

11. Support non transitoire lisible par ordinateur sur lequel sont stockées des instructions qui, lorsqu'elles sont exécutées par un processeur, amènent le processeur à réaliser des opérations comprises par le procédé mis en œuvre par ordinateur selon l'une quelconque des revendications 1 à 10.

12. Dispositif informatique (800) comprenant :
un processeur (802) ; et
une mémoire (804) couplée au processeur (802) sur laquelle sont stockées des instructions qui, lorsqu'elles sont exécutées par le processeur (802), amènent le processeur (802) à réaliser des opérations comprises par le procédé mis en œuvre par ordinateur selon l'une quelconque des revendications 1 à 10.
